# EUROPEAN PATENT SPECIFICATION

(11) **EP 4 218 339 B1**
(45) Date of publication and mention of the grant of the patent: **19.11.2025**
(21) Application number: 21801802.6
(22) Date of filing: 23.09.2021
(51) Int. Cl.: H04W 72/23, H04L 5/00, H04W 72/0446, H04L 27/26

(54) **REFERENCE SIGNAL BASED SECONDARY CELL ACTIVATION**
REFERENZSIGNALBASIERTE SEKUNDÄRZELLENAKTIVIERUNG
ACTIVATION DE CELLULE SECONDAIRE BASÉE SUR UN SIGNAL DE RÉFÉRENCE

(30) Priority: 28.09.2020 US 202063198088 P; 22.09.2021 US 202117448485
(43) Date of publication of application: 02.08.2023
(73) Proprietor: QUALCOMM Incorporated, San Diego, CA 92121-1714 (US)
(72) Inventor: TAKEDA, Kazuki, San Diego, California 92121 (US); RICO ALVARINO, Alberto, San Diego, California 92121 (US); GAAL, Peter, San Diego, California 92121 (US); CHEN, Wanshi, San Diego, California 92121 (US); LUO, Tao, San Diego, California 92121 (US); SUN, Jing, San Diego, California 92121 (US); MONTOJO, Juan, San Diego, California 92121 (US); KHOSHNEVISAN, Mostafa, San Diego, California 92121 (US)
(74) Representative: Jaeger, Michael David
(86) International application number: PCT/US2021/071573
(87) International publication number: WO 2022/067326

(56) References cited:
- US-A1- 2020 177 336
- NOKIA ET AL: "On low latency Scell activation", vol. RAN WG1, no. e-Meeting; 20200817 - 20200828, 7 August 2020 (2020-08-07), XP051915075, Retrieved from the Internet <URL:https://ftp.3gpp.org/tsg_ran/WG1_RL1/TSGR1_102-e/Docs/R1-2005908.zip R1-2005908_Efficient_CA.doc> [retrieved on 20200807]
- QUALCOMM INCORPORATED: "SCell activation timeline in NR", vol. RAN WG4, no. Melbourne, Australia; 20180416 - 20180420, 15 April 2018 (2018-04-15), XP051432097, Retrieved from the Internet <URL:http://www.3gpp.org/ftp/Meetings%5F3GPP%5FSYNC/RAN4/Docs/> [retrieved on 20180415]
- "3rd Generation Partnership Project; Technical Specification Group Radio Access Network; Evolved Universal Terrestrial Radio Access (E-UTRA); Requirements for support of radio resource management (Release 13)", vol. RAN WG4, no. V13.19.0, 17 July 2020 (2020-07-17), pages 65 - 436, XP051925348, Retrieved from the Internet <URL:ftp://ftp.3gpp.org/Specs/archive/36_series/36.133/36133-dj0.zip 36133-dj0_s00-11.doc> [retrieved on 20200717]
- "3rd Generation Partnership Project; Technical Specification Group Radio Access Network; NR; Study on UE Power Saving (Release 16)", 2 June 2019 (2019-06-02), XP051747295, Retrieved from the Internet <URL:http://www.3gpp.org/ftp/Meetings%5F3GPP%5FSYNC/RAN/Docs/RP%2D191083%2Ezip> [retrieved on 20190602]

## Description

### FIELD OF THE DISCLOSURE

Aspects of the present disclosure generally relate to wireless communication and to techniques and apparatuses for reference signal based secondary cell activation.

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, or the like). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless network may include one or more base stations that support communication for a user equipment (UE) or multiple UEs. A UE may communicate with a base station via downlink communications and uplink communications. "Downlink" (or "DL") refers to a communication link from the base station to the UE, and "uplink" (or "UL") refers to a communication link from the UE to the base station.

The above multiple access technologies have been adopted in various telecommunication standards to provide a common protocol that enables different UEs to communicate on a municipal, national, regional, and/or global level. New Radio (NR), which may be referred to as 5G, is a set of enhancements to the LTE mobile standard promulgated by the 3GPP. NR is designed to better support mobile broadband internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink, using CP-OFDM and/or single-carrier frequency division multiplexing (SC-FDM) (also known as discrete Fourier transform spread OFDM (DFT-s-OFDM)) on the uplink, as well as supporting beamforming, multiple-input multiple-output (MIMO) antenna technology, and carrier aggregation. As the demand for mobile broadband access continues to increase, further improvements in LTE, NR, and other radio access technologies remain useful.

3GPP discussion document R1-2005908 "On low latency Scell activation" by Nokia, Nokia Shanghai Bell discusses an efficient secondary cell activation mechanism. US 2020/177336 A1 discusses a secondary cell activation method and apparatus. 3GPP discussion document R4-1805324 "SCell activation timeline in NR" by Qualcomm Incorporated discusses a timeline for secondary cell activation in NR where the network provides the UE with a tracking reference signal to speed up the activation. 3GPP technical specification TS 36.133 v13.19.0 discusses secondary cell activation. 3GPP technical report TR 38.840 v2.0.0 provides a study on UE power saving.

### SUMMARY

The invention is defined by the independent claims. Advantageous embodiments are set out in the dependent claims. In some aspects, a method of wireless communication performed by a user equipment (UE) includes determining a timing for a reference signal measurement; and measuring, for a secondary cell activation procedure, a reference signal based at least in part on determining the timing for the reference signal measurement.

In some aspects, a method of wireless communication performed by a base station includes determining a timing for a reference signal; and transmitting, for a secondary cell activation procedure, the reference signal based at least in part on determining the timing for the reference signal.

In some aspects, a UE for wireless communication includes a memory; and one or more processors coupled to the memory, the one or more processors configured to: determine a timing for a reference signal measurement; and measure, for a secondary cell activation procedure, a reference signal based at least in part on determining the timing for the reference signal measurement.

In some aspects, a base station for wireless communication includes a memory; and one or more processors coupled to the memory, the one or more processors configured to: determine a timing for a reference signal; and transmit, for a secondary cell activation procedure, the reference signal based at least in part on determining the timing for the reference signal.

In some aspects, a non-transitory computer-readable medium storing a set of instructions for wireless communication includes one or more instructions that, when executed by one or more processors of a UE, cause the UE to: determine a timing for a reference signal measurement; and measure, for a secondary cell activation procedure, a reference signal based at least in part on determining the timing for the reference signal measurement.

In some aspects, a non-transitory computer-readable medium storing a set of instructions for wireless communication includes one or more instructions that, when executed by one or more processors of a base station, cause the base station to: determine a timing for a reference signal; and transmit, for a secondary cell activation procedure, the reference signal based at least in part on determining the timing for the reference signal.

In some aspects, an apparatus for wireless communication includes means for determining a timing for a reference signal measurement; and means for measuring, for a secondary cell activation procedure, a reference signal based at least in part on determining the timing for the reference signal measurement.

In some aspects, an apparatus for wireless communication includes means for determining a timing for a reference signal; and means for transmitting, for a secondary cell activation procedure, the reference signal based at least in part on determining the timing for the reference signal.

Aspects generally include a method, apparatus, system, computer program product, non-transitory computer-readable medium, user equipment, base station, wireless communication device, and/or processing system as substantially described herein with reference to and as illustrated by the drawings and specification.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages, will be better understood from the following description when considered in connection with the accompanying figures. Each of the figures is provided for the purposes of illustration and description, and not as a definition of the limits of the claims.

While aspects are described in the present disclosure by illustration to some examples, those skilled in the art will understand that such aspects may be implemented in many different arrangements and scenarios. Techniques described herein may be implemented using different platform types, devices, systems, shapes, sizes, and/or packaging arrangements. For example, some aspects may be implemented via integrated chip embodiments or other non-module-component based devices (e.g., end-user devices, vehicles, communication devices, computing devices, industrial equipment, retail/purchasing devices, medical devices, and/or artificial intelligence devices). Aspects may be implemented in chip-level components, modular components, non-modular components, non-chip-level components, device-level components, and/or system-level components. Devices incorporating described aspects and features may include additional components and features for implementation and practice of claimed and described aspects. For example, transmission and reception of wireless signals may include one or more components for analog and digital purposes (e.g., hardware components including antennas, radio frequency (RF) chains, power amplifiers, modulators, buffers, processors, interleavers, adders, and/or summers). It is intended that aspects described herein may be practiced in a wide variety of devices, components, systems, distributed arrangements, and/or end-user devices of varying size, shape, and constitution.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a diagram illustrating an example of a wireless network, in accordance with the present disclosure.
Fig. 2 is a diagram illustrating an example of a base station in communication with a user equipment (UE) in a wireless network, in accordance with the present disclosure.
Fig. 3 is a diagram illustrating an example of physical channels and reference signals in a wireless network, in accordance with the present disclosure.
Figs. 4A-4B are diagrams illustrating an example of a delay associated with secondary cell activation, in accordance with the present disclosure.
Figs. 5A-5B are diagrams illustrating an example of a timing associated with secondary cell activation, in accordance with the present disclosure.
Figs. 6A-6B are diagrams illustrating an example associated with reference signal based secondary cell activation, in accordance with the present disclosure.
Fig. 7 is a diagram illustrating an example associated with reference signal based secondary cell activation, in accordance with the present disclosure.
Figs. 8-9 are diagrams illustrating example processes associated with reference signal based secondary cell activation, in accordance with the present disclosure.
Figs. 10-11 are block diagrams of example apparatuses for wireless communication, in accordance with the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. One skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, or the like (collectively referred to as "elements"). These elements may be implemented using hardware, software, or combinations thereof. Whether such elements are implemented as hardware or software depends upon the particular application and design constraints imposed on the overall system.

While aspects may be described herein using terminology commonly associated with a 5G or New Radio (NR) radio access technology (RAT), aspects of the present disclosure can be applied to other RATs, such as a 3G RAT, a 4G RAT, and/or a RAT subsequent to 5G (e.g., 6G).

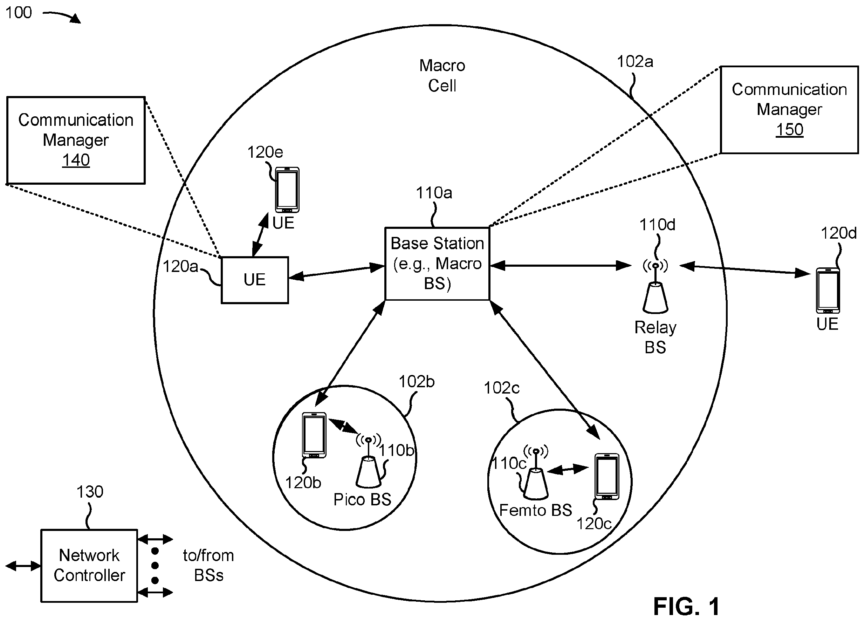

Fig. 1 is a diagram illustrating an example of a wireless network 100, in accordance with the present disclosure. The wireless network 100 may be or may include elements of a 5G (e.g., NR) network and/or a 4G (e.g., Long Term Evolution (LTE)) network, among other examples. The wireless network 100 may include one or more base stations 110 (shown as a BS 110a, a BS 110b, a BS 110c, and a BS 110d). a user equipment (UE) 120 or multiple UEs 120 (shown as a UE 120a, a UE 120b, a UE 120c, a UE 120d, and a UE 120e), and/or other network entities. A base station 110 is an entity that communicates with UEs 120. A base station 110 (sometimes referred to as a BS) may include, for example, an NR base station, an LTE base station, a Node B, an eNB (e.g., in 4G), a gNB (e.g., in 5G), an access point, and/or a transmission reception point (TRP). Each base station 110 may provide communication coverage for a particular geographic area. In the Third Generation Partnership Project (3GPP), the term "cell" can refer to a coverage area of a base station 110 and/or a base station subsystem serving this coverage area, depending on the context in which the term is used.

A base station 110 may provide communication coverage for a macro cell, a pico cell, a femto cell, and/or another type of cell. A macro cell may cover a relatively large geographic area (e.g., several kilometers in radius) and may allow unrestricted access by UEs 120 with service subscriptions. A pico cell may cover a relatively small geographic area and may allow unrestricted access by UEs 120 with service subscription. A femto cell may cover a relatively small geographic area (e.g., a home) and may allow restricted access by UEs 120 having association with the femto cell (e.g., UEs 120 in a closed subscriber group (CSG)). A base station 110 for a macro cell may be referred to as a macro base station. A base station 110 for a pico cell may be referred to as a pico base station. A base station 110 for a femto cell may be referred to as a femto base station or an in-home base station. In the example shown in Fig. 1, the BS 110a may be a macro base station for a macro cell 102a, the BS 110b may be a pico base station for a pico cell 102b, and the BS 110c may be a femto base station for a femto cell 102c. A base station may support one or multiple (e.g., three) cells.

In some examples, a cell may not necessarily be stationary, and the geographic area of the cell may move according to the location of a base station 110 that is mobile (e.g., a mobile base station). In some examples, the base stations 110 may be interconnected to one another and/or to one or more other base stations 110 or network nodes (not shown) in the wireless network 100 through various types of backhaul interfaces, such as a direct physical connection or a virtual network, using any suitable transport network.

The wireless network 100 may include one or more relay stations. A relay station is an entity that can receive a transmission of data from an upstream station (e.g., a base station 110 or a UE 120) and send a transmission of the data to a downstream station (e.g., a UE 120 or a base station 110). A relay station may be a UE 120 that can relay transmissions for other UEs 120. In the example shown in Fig. 1, the BS 110d (e.g., a relay base station) may communicate with the BS 110a (e.g., a macro base station) and the UE 120d in order to facilitate communication between the BS 110a and the UE 120d. A base station 110 that relays communications may be referred to as a relay station, a relay base station, a relay, or the like.

The wireless network 100 may be a heterogeneous network that includes base stations 110 of different types, such as macro base stations, pico base stations, femto base stations, relay base stations, or the like. These different types of base stations 110 may have different transmit power levels, different coverage areas, and/or different impacts on interference in the wireless network 100. For example, macro base stations may have a high transmit power level (e.g., 5 to 40 watts) whereas pico base stations, femto base stations, and relay base stations may have lower transmit power levels (e.g., 0.1 to 2 watts).

A network controller 130 may couple to or communicate with a set of base stations 110 and may provide coordination and control for these base stations 110. The network controller 130 may communicate with the base stations 110 via a backhaul communication link. The base stations 110 may communicate with one another directly or indirectly via a wireless or wireline backhaul communication link.

The UEs 120 may be dispersed throughout the wireless network 100, and each UE 120 may be stationary or mobile. A UE 120 may include, for example, an access terminal, a terminal, a mobile station, and/or a subscriber unit. A UE 120 may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device, a biometric device, a wearable device (e.g., a smart watch, smart clothing, smart glasses, a smart wristband, smart jewelry (e.g., a smart ring or a smart bracelet)), an entertainment device (e.g., a music device, a video device, and/or a satellite radio), a vehicular component or sensor, a smart meter/sensor, industrial manufacturing equipment, a global positioning system device, and/or any other suitable device that is configured to communicate via a wireless medium.

Some UEs 120 may be considered machine-type communication (MTC) or evolved or enhanced machine-type communication (eMTC) UEs. An MTC UE and/or an eMTC UE may include, for example, a robot, a drone, a remote device, a sensor, a meter, a monitor, and/or a location tag, that may communicate with a base station, another device (e.g., a remote device), or some other entity. Some UEs 120 may be considered Internet-of-Things (IoT) devices, and/or may be implemented as NB-IoT (narrowband IoT) devices. Some UEs 120 may be considered a Customer Premises Equipment. A UE 120 may be included inside a housing that houses components of the UE 120, such as processor components and/or memory components. In some examples, the processor components and the memory components may be coupled together. For example, the processor components (e.g., one or more processors) and the memory components (e.g., a memory) may be operatively coupled, communicatively coupled, electronically coupled, and/or electrically coupled.

In general, any number of wireless networks 100 may be deployed in a given geographic area. Each wireless network 100 may support a particular RAT and may operate on one or more frequencies. A RAT may be referred to as a radio technology, an air interface, or the like. A frequency may be referred to as a carrier, a frequency channel, or the like. Each frequency may support a single RAT in a given geographic area in order to avoid interference between wireless networks of different RATs. In some cases, NR or 5G RAT networks may be deployed.

In some examples, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol, a vehicle-to-infrastructure (V2I) protocol, or a vehicle-to-pedestrian (V2P) protocol), and/or a mesh network. In such examples, a UE 120 may perform scheduling operations, resource selection operations, and/or other operations described elsewhere herein as being performed by the base station 110.

Devices of the wireless network 100 may communicate using the electromagnetic spectrum, which may be subdivided by frequency or wavelength into various classes, bands, channels, or the like. For example, devices of the wireless network 100 may communicate using one or more operating bands. In 5G NR, two initial operating bands have been identified as frequency range designations FR1 (410 MHz - 7.125 GHz) and FR2 (24.25 GHz - 52.6 GHz). It should be understood that although a portion of FR1 is greater than 6 GHz, FR1 is often referred to (interchangeably) as a "Sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above examples in mind, unless specifically stated otherwise, it should be understood that the term "sub-6 GHz" or the like, if used herein, may broadly represent frequencies that may be less than 6 GHz, may be within FR1, or may include mid-band frequencies. Further, unless specifically stated otherwise, it should be understood that the term "millimeter wave" or the like, if used herein, may broadly represent frequencies that may include mid-band frequencies, may be within FR2, FR4, FR4-a or FR4-1, and/or FR5, or may be within the EHF band. It is contemplated that the frequencies included in these operating bands (e.g., FR1, FR2, FR3, FR4, FR4-a, FR4-1, and/or FR5) may be modified, and techniques described herein are applicable to those modified frequency ranges.

In some aspects, the UE 120 may include a communication manager 140. As described in more detail elsewhere herein, the communication manager 140 may determine a timing for a reference signal measurement; and measure, for a secondary cell activation procedure, a reference signal based at least in part on determining the timing for the reference signal measurement. Additionally, or alternatively, the communication manager 140 may perform one or more other operations described herein.

In some aspects, the base station 110 may include a communication manager 150. As described in more detail elsewhere herein, the communication manager 150 may determine a timing for a reference signal; and transmit, for a secondary cell activation procedure, the reference signal based at least in part on determining the timing for the reference signal. Additionally, or alternatively, the communication manager 150 may perform one or more other operations described herein.

As indicated above, Fig. 1 is provided as an example. Other examples may differ from what is described with regard to Fig. 1.

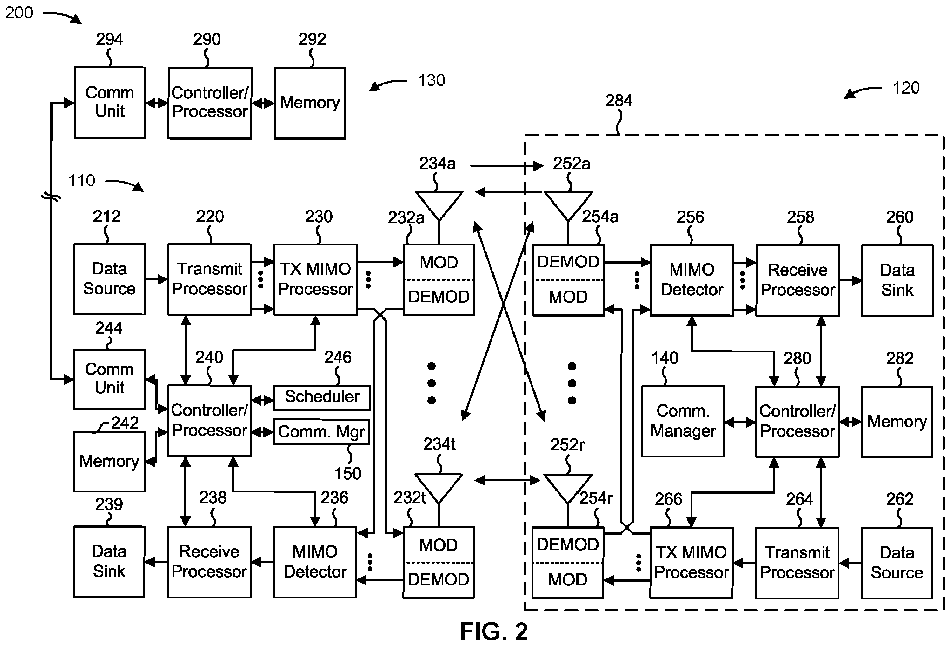

Fig. 2 is a diagram illustrating an example 200 of a base station 110 in communication with a UE 120 in a wireless network 100, in accordance with the present disclosure. The base station 110 may be equipped with a set of antennas 234a through 234t, such as *T* antennas (*T* ≥ 1). The UE 120 may be equipped with a set of antennas 252a through 252r, such as R antennas (R ≥ 1).

At the base station 110, a transmit processor 220 may receive data, from a data source 212, intended for the UE 120 (or a set of UEs 120). The transmit processor 220 may select one or more modulation and coding schemes (MCSs) for the UE 120 based at least in part on one or more channel quality indicators (CQIs) received from that UE 120. The base station 110 may process (e.g., encode and modulate) the data for the UE 120 based at least in part on the MCS(s) selected for the UE 120 and may provide data symbols for the UE 120. The transmit processor 220 may process system information (e.g., for semi-static resource partitioning information (SRPI)) and control information (e.g., CQI requests, grants, and/or upper layer signaling) and provide overhead symbols and control symbols. The transmit processor 220 may generate reference symbols for reference signals (e.g., a cell-specific reference signal (CRS) or a demodulation reference signal (DMRS)) and synchronization signals (e.g., a primary synchronization signal (PSS) or a secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide a set of output symbol streams (e.g., T output symbol streams) to a corresponding set of modems 232 (e.g., T modems), shown as modems 232a through 232t. For example, each output symbol stream may be provided to a modulator component (shown as MOD) of a modem 232. Each modem 232 may use a respective modulator component to process a respective output symbol stream (e.g., for OFDM) to obtain an output sample stream. Each modem 232 may further use a respective modulator component to process (e.g., convert to analog, amplify, filter, and/or upconvert) the output sample stream to obtain a downlink signal. The modems 232a through 232t may transmit a set of downlink signals (e.g., T downlink signals) via a corresponding set of antennas 234 (e.g., T antennas), shown as antennas 234a through 234t.

At the UE 120, a set of antennas 252 (shown as antennas 252a through 252r) may receive the downlink signals from the base station 110 and/or other base stations 110 and may provide a set of received signals (e.g., R received signals) to a set of modems 254 (e.g., *R* modems), shown as modems 254a through 254r. For example, each received signal may be provided to a demodulator component (shown as DEMOD) of a modem 254. Each modem 254 may use a respective demodulator component to condition (e.g., filter, amplify, downconvert, and/or digitize) a received signal to obtain input samples. Each modem 254 may use a demodulator component to further process the input samples (e.g., for OFDM) to obtain received symbols. A MIMO detector 256 may obtain received symbols from the modems 254, may perform MIMO detection on the received symbols if applicable, and may provide detected symbols. A receive processor 258 may process (e.g., demodulate and decode) the detected symbols, may provide decoded data for the UE 120 to a data sink 260, and may provide decoded control information and system information to a controller/processor 280. The term "controller/processor" may refer to one or more controllers, one or more processors, or a combination thereof. A channel processor may determine a reference signal received power (RSRP) parameter, a received signal strength indicator (RSSI) parameter, a reference signal received quality (RSRQ) parameter, and/or a CQI parameter, among other examples. In some examples, one or more components of the UE 120 may be included in a housing 284.

The network controller 130 may include a communication unit 294, a controller/processor 290, and a memory 292. The network controller 130 may include, for example, one or more devices in a core network. The network controller 130 may communicate with the base station 110 via the communication unit 294.

One or more antennas (e.g., antennas 234a through 234t and/or antennas 252a through 252r) may include, or may be included within, one or more antenna panels, one or more antenna groups, one or more sets of antenna elements, and/or one or more antenna arrays, among other examples. An antenna panel, an antenna group, a set of antenna elements, and/or an antenna array may include one or more antenna elements (within a single housing or multiple housings), a set of coplanar antenna elements, a set of non-coplanar antenna elements, and/or one or more antenna elements coupled to one or more transmission and/or reception components, such as one or more components of Fig. 2.

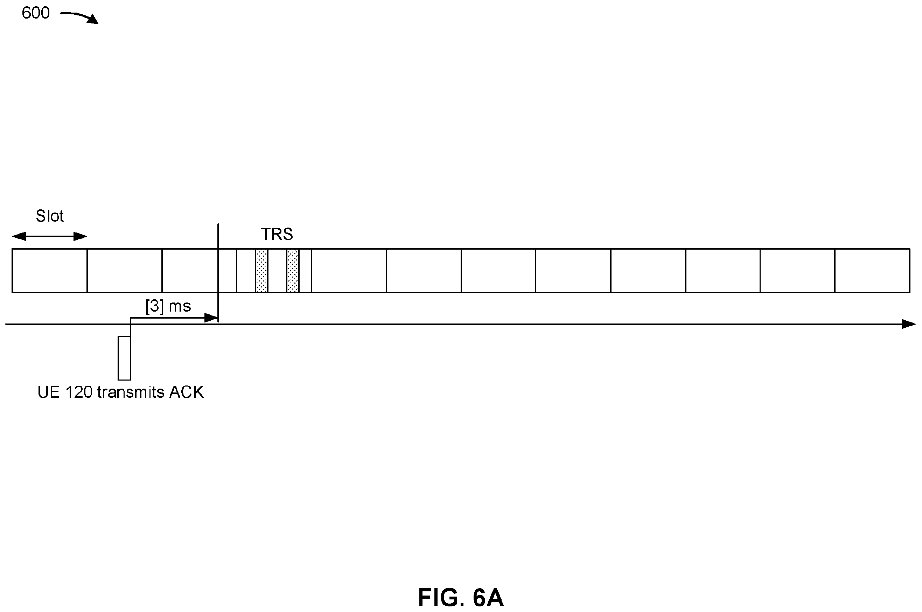

On the uplink, at the UE 120, a transmit processor 264 may receive and process data from a data source 262 and control information (e.g., for reports that include RSRP, RSSI, RSRQ, and/or CQI) from the controller/processor 280. The transmit processor 264 may generate reference symbols for one or more reference signals. The symbols from the transmit processor 264 may be precoded by a TX MIMO processor 266 if applicable, further processed by the modems 254 (e.g., for DFT-s-OFDM or CP-OFDM), and transmitted to the base station 110. In some examples, the modem 254 of the UE 120 may include a modulator and a demodulator. In some examples, the UE 120 includes a transceiver. The transceiver may include any combination of the antenna(s) 252, the modem(s) 254, the MIMO detector 256, the receive processor 258, the transmit processor 264, and/or the TX MIMO processor 266. The transceiver may be used by a processor (e.g., the controller/processor 280) and the memory 282 to perform aspects of any of the methods described herein (e.g., with reference to Figs. 6A-11).

At the base station 110, the uplink signals from UE 120 and/or other UEs may be received by the antennas 234, processed by the modem 232 (e.g., a demodulator component, shown as DEMOD, of the modem 232), detected by a MIMO detector 236 if applicable, and further processed by a receive processor 238 to obtain decoded data and control information sent by the UE 120. The receive processor 238 may provide the decoded data to a data sink 239 and provide the decoded control information to the controller/processor 240. The base station 110 may include a communication unit 244 and may communicate with the network controller 130 via the communication unit 244. The base station 110 may include a scheduler 246 to schedule one or more UEs 120 for downlink and/or uplink communications. In some examples, the modem 232 of the base station 110 may include a modulator and a demodulator. In some examples, the base station 110 includes a transceiver. The transceiver may include any combination of the antenna(s) 234, the modem(s) 232, the MIMO detector 236, the receive processor 238, the transmit processor 220, and/or the TX MIMO processor 230. The transceiver may be used by a processor (e.g., the controller/processor 240) and the memory 242 to perform aspects of any of the methods described herein (e.g., with reference to Figs. 6A-11).

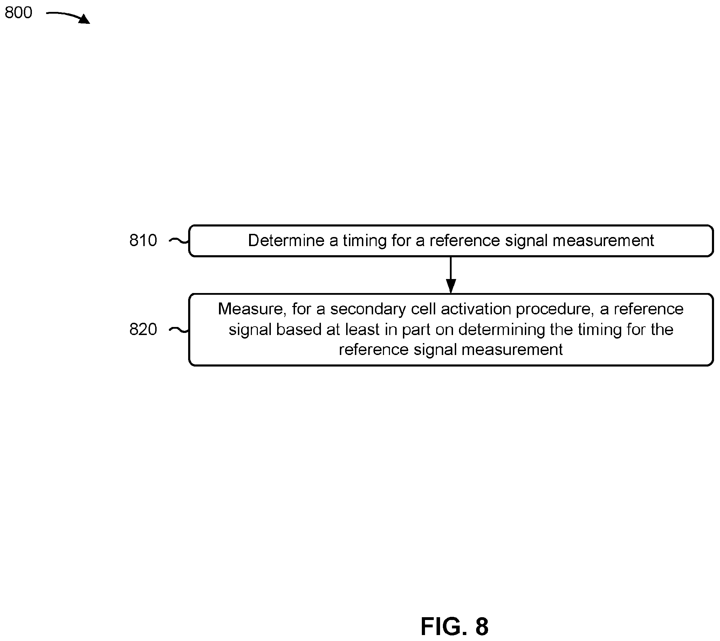

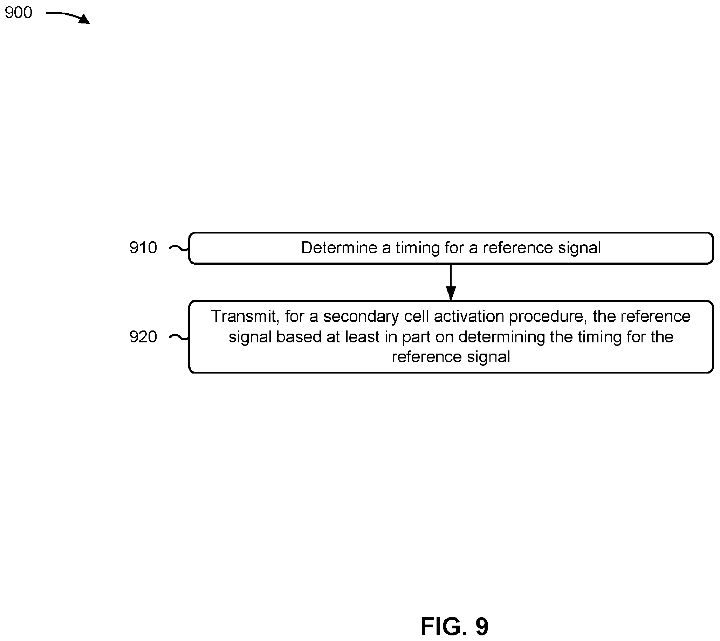

The controller/processor 240 of the base station 110, the controller/processor 280 of the UE 120, and/or any other component(s) of Fig. 2 may perform one or more techniques associated with reference signal based secondary cell activation, as described in more detail elsewhere herein. For example, the controller/processor 240 of the base station 110, the controller/processor 280 of the UE 120, and/or any other component(s) of Fig. 2 may perform or direct operations of, for example, process 800 of Fig. 8, process 900 of Fig. 9, and/or other processes as described herein. The memory 242 and the memory 282 may store data and program codes for the base station 110 and the UE 120, respectively. In some examples, the memory 242 and/or the memory 282 may include a non-transitory computer-readable medium storing one or more instructions (e.g., code and/or program code) for wireless communication. For example, the one or more instructions, when executed (e.g., directly, or after compiling, converting, and/or interpreting) by one or more processors of the base station 110 and/or the UE 120, may cause the one or more processors, the UE 120, and/or the base station 110 to perform or direct operations of, for example, process 800 of Fig. 8, process 900 of Fig. 9, and/or other processes as described herein. In some examples, executing instructions may include running the instructions, converting the instructions, compiling the instructions, and/or interpreting the instructions, among other examples.

In some aspects, UE 120 may include means for determining a timing for a reference signal measurement, means for measuring, for a secondary cell activation procedure, a reference signal based at least in part on determining the timing for the reference signal measurement, and/or the like. In some aspects, such means may include one or more components of UE 120 described in connection with Fig. 2, such as controller/processor 280, transmit processor 264, TX MIMO processor 266, MOD 254, antenna 252, DEMOD 254, MIMO detector 256, receive processor 258, and/or the like.

In some aspects, base station 110 may include means for determining a timing for a reference signal, means for transmitting, for a secondary cell activation procedure, the reference signal based at least in part on determining the timing for the reference signal, and/or the like. In some aspects, such means may include one or more components of base station 110 described in connection with Fig. 2, such as antenna 234, DEMOD 232, MIMO detector 236, receive processor 238, controller/processor 240, transmit processor 220, TX MIMO processor 230, MOD 232, antenna 234, and/or the like.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of the controller/processor 280.

As indicated above, Fig. 2 is provided as an example. Other examples may differ from what is described with regard to Fig. 2.

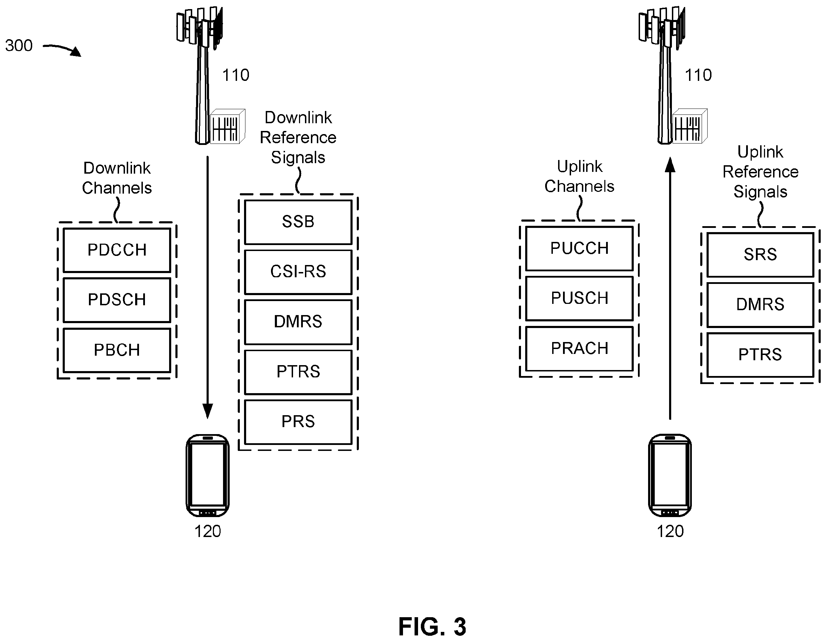

Fig. 3 is a diagram illustrating an example 300 of physical channels and reference signals in a wireless network, in accordance with various aspects of the present disclosure. As shown in Fig. 3, downlink channels and downlink reference signals may carry information from a base station 110 to a UE 120, and uplink channels and uplink reference signals may carry information from a UE 120 to a base station 110.

As shown, a downlink channel may include a physical downlink control channel (PDCCH) that carries downlink control information (DCI), a physical downlink shared channel (PDSCH) that carries downlink data, or a physical broadcast channel (PBCH) that carries system information, among other examples. In some aspects, PDSCH communications may be scheduled by PDCCH communications. As further shown, an uplink channel may include a physical uplink control channel (PUCCH) that carries uplink control information (UCI), a physical uplink shared channel (PUSCH) that carries uplink data, or a physical random access channel (PRACH) used for initial network access, among other examples. In some aspects, the UE 120 may transmit acknowledgement (ACK) or negative acknowledgement (NACK) feedback (e.g., ACK/NACK feedback or ACK/NACK information) in UCI on the PUCCH and/or the PUSCH.

As further shown, a downlink reference signal may include a synchronization signal block (SSB), a channel state information (CSI) reference signal (CSI-RS), a DMRS, a positioning reference signal (PRS), or a phase tracking reference signal (PTRS), among other examples. As also shown, an uplink reference signal may include a sounding reference signal (SRS), a DMRS, or a PTRS, among other examples.

An SSB may carry information used for initial network acquisition and synchronization, such as a PSS, an SSS, a PBCH, and a PBCH DMRS. An SSB is sometimes referred to as a synchronization signal/PBCH (SS/PBCH) block. In some aspects, the base station 110 may transmit multiple SSBs on multiple corresponding beams, and the SSBs may be used for beam selection.

A CSI-RS may carry information used for downlink channel estimation (e.g., downlink CSI acquisition), which may be used for scheduling, link adaptation, or beam management, among other examples. The base station 110 may configure a set of CSI-RSs for the UE 120, and the UE 120 may measure the configured set of CSI-RSs. Based at least in part on the measurements, the UE 120 may perform channel estimation and may report channel estimation parameters to the base station 110 (e.g., in a CSI report), such as a CQI, a precoding matrix indicator (PMI), a CSI-RS resource indicator (CRI), a layer indicator (LI), a rank indicator (RI), or an RSRP, among other examples. The base station 110 may use the CSI report to select transmission parameters for downlink communications to the UE 120, such as a number of transmission layers (e.g., a rank), a precoding matrix (e.g., a precoder), a n MCS, or a refined downlink beam (e.g., using a beam refinement procedure or a beam management procedure), among other examples.

A DMRS may carry information used to estimate a radio channel for demodulation of an associated physical channel (e.g., PDCCH, PDSCH, PBCH, PUCCH, or PUSCH). The design and mapping of a DMRS may be specific to a physical channel for which the DMRS is used for estimation. DMRSs are UE-specific, can be beamformed, can be confined in a scheduled resource (e.g., rather than transmitted on a wideband), and can be transmitted only when necessary. As shown, DMRSs are used for both downlink communications and uplink communications.

A PTRS may carry information used to compensate for oscillator phase noise. Typically, the phase noise increases as the oscillator carrier frequency increases. Thus, PTRS can be utilized at high carrier frequencies, such as millimeter wave frequencies, to mitigate phase noise. The PTRS may be used to track the phase of the local oscillator and to enable suppression of phase noise and common phase error (CPE). As shown, PTRSs are used for both downlink communications (e.g., on the PDSCH) and uplink communications (e.g., on the PUSCH).

A PRS may carry information used to enable timing or ranging measurements of the UE 120 based on signals transmitted by the base station 110 to improve observed time difference of arrival (OTDOA) positioning performance. For example, a PRS may be a pseudorandom Quadrature Phase Shift Keying (QPSK) sequence mapped in diagonal patterns with shifts in frequency and time to avoid collision with cell-specific reference signals and control channels (e.g., a PDCCH). In general, a PRS may be designed to improve detectability by the UE 120, which may need to detect downlink signals from multiple neighboring base stations in order to perform OTDOA-based positioning. Accordingly, the UE 120 may receive a PRS from multiple cells (e.g., a reference cell and one or more neighbor cells), and may report a reference signal time difference (RSTD) based on OTDOA measurements associated with the PRSs received from the multiple cells. In some aspects, the base station 110 may then calculate a position of the UE 120 based on the RSTD measurements reported by the UE 120.

An SRS may carry information used for uplink channel estimation, which may be used for scheduling, link adaptation, precoder selection, or beam management, among other examples. The base station 110 may configure one or more SRS resource sets for the UE 120, and the UE 120 may transmit SRSs on the configured SRS resource sets. An SRS resource set may have a configured usage, such as uplink CSI acquisition, downlink CSI acquisition for reciprocity-based operations, uplink beam management, among other examples. The base station 110 may measure the SRSs, may perform channel estimation based at least in part on the measurements, and may use the SRS measurements to configure communications with the UE 120.

As indicated above, Fig. 3 is provided as an example. Other examples may differ from what is described with regard to Fig. 3.

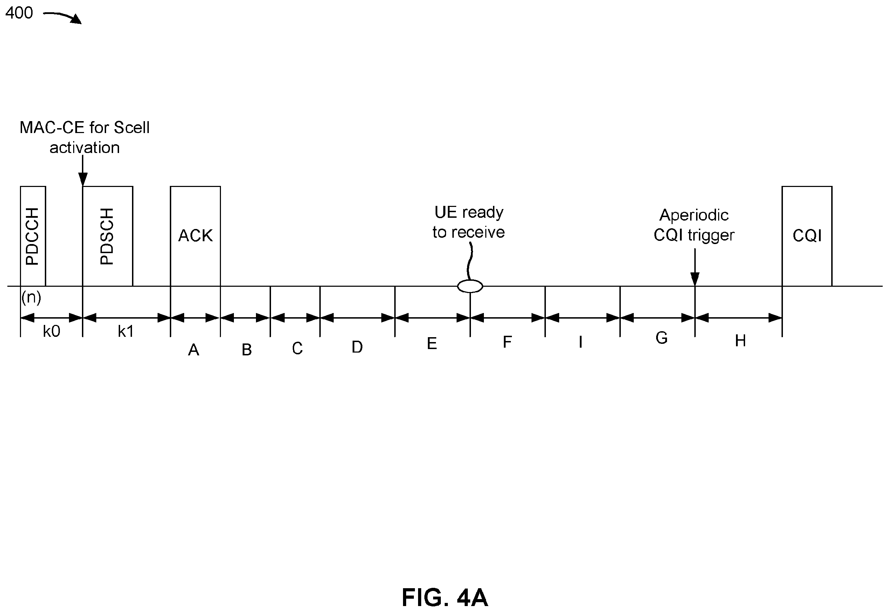

Figs. 4A-4B are diagrams illustrating an example 400 of a delay associated with secondary cell activation, in accordance with various aspects of the present disclosure.

As shown in Fig. 4A, a timeline for a UE activating a secondary cell for reception may include a set of discrete events with a set of delay periods between each event. For example, a UE may receive a PDCCH at a first time, n, and may receive a PDSCH at a second time, n+k0, where k0 is a parameter defined in a specification, such as 3GPP Technical Specification (TS) 38.214. In this case, the UE may receive a medium access control (MAC) control element (CE) in the PDSCH, which may trigger activation of a secondary cell. During a secondary cell activation procedure, the UE may transmit a hybrid automatic repeat request (HARQ) ACK as a response to receiving the PDSCH that includes the MAC CE. For example, the UE may transmit the ACK at a time n+k0+k1, where k1 is a parameter defined in a specification, such as 3GPP TS 38.214. In this case, the ACK message may span between a first time period A, which may be followed by a MAC CE L2 procedure spanning a time period B, a radio frequency (RF) retuning procedure spanning a time period C, an RF warm up procedure spanning a time period D, and a further margin period spanning a time period E, where B, C, D, and E are parameters defined in a specification, such as 3GPP TS 38.213.

After time period E, the UE may be ready to receive communications as part of the secondary cell activation, however, before transmission of a CQI to configure communication, there may be an occurrence a set of additional procedures. For example, the timeline for secondary cell activation may include an automatic gain control (AGC) setting procedure spanning a time period F, a PSS and SSS MIB acquisition spanning a time period I, another margin period to account for an SSB (at which point a BS may trigger an aperiodic CQI), and a CQI reporting spanning a tie period H (at which point the UE may transmit a CQI). In this case, F, I, G, and H may be further parameters that may be defined in a specification, such as 3GPP TS 38.214 or another specification. In sum, for a 15 kilohertz (KHz) subcarrier spacing (SCS), a 20 millisecond (ms) SSB-based radio resource management (RRM) measurement timing configuration window (SMTC), the secondary cell is a known cell in FR1, and a less than or equal to 160 ms secondary cell measurement cycle, a maximum of approximately 28.57 ms may elapse for secondary cell activation. Similarly, for a greater than 160 ms secondary cell measurement cyle, a maximum of approximately 48.57 ms may elapse for secondary cell activation. Similarly, when the secondary cell is not a known cell in FR1, a maximum of approximately 88.57 ms may elapse for secondary cell activation.

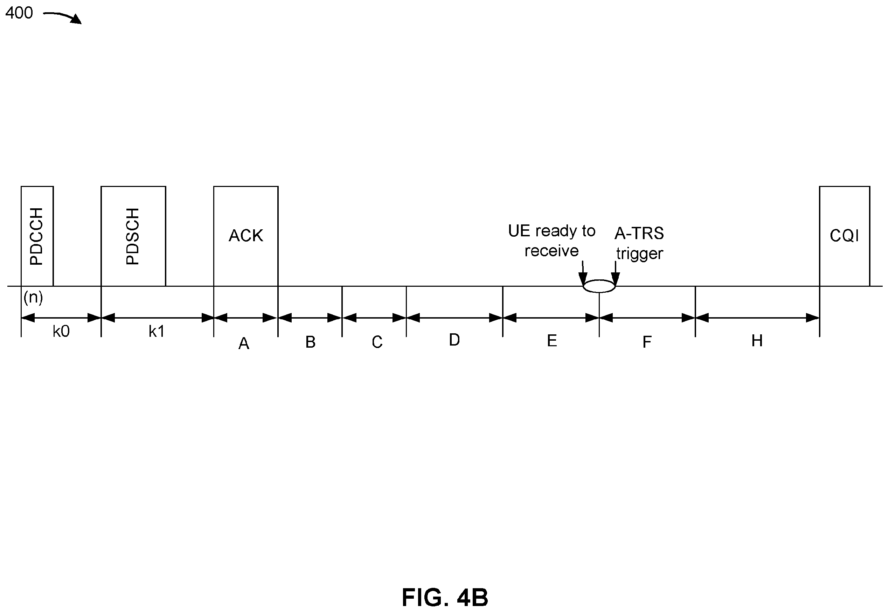

As shown in Fig. 4B, fast secondary cell activation may be introduced to reduce an amount of time for secondary cell activation. In fast secondary cell activation procedures, rather than aperiodic CQI triggering after time period G, a BS may activate an aperiodic (A-TRS) at approximately the beginning of the time period F, which may be allocated for the tracking reference signal (TRS) and one or more additional slots (e.g., 2 slots). Further, AGC setting may be omitted in fast secondary cell activation. As a result, depending on whether a dormant bandwidth part, a DCI, or another procedure is used, a maximum of between 2.57 ms to 28.57 ms may elapse for secondary cell activation. Thus, fast secondary cell activation may have a maximum delay that is the same length or shorter than for prior secondary cell activation procedures.

As indicated above, Figs. 4A-4B are provided as one or more examples. Other examples may differ from what is described with respect to Figs. 4A-4B.

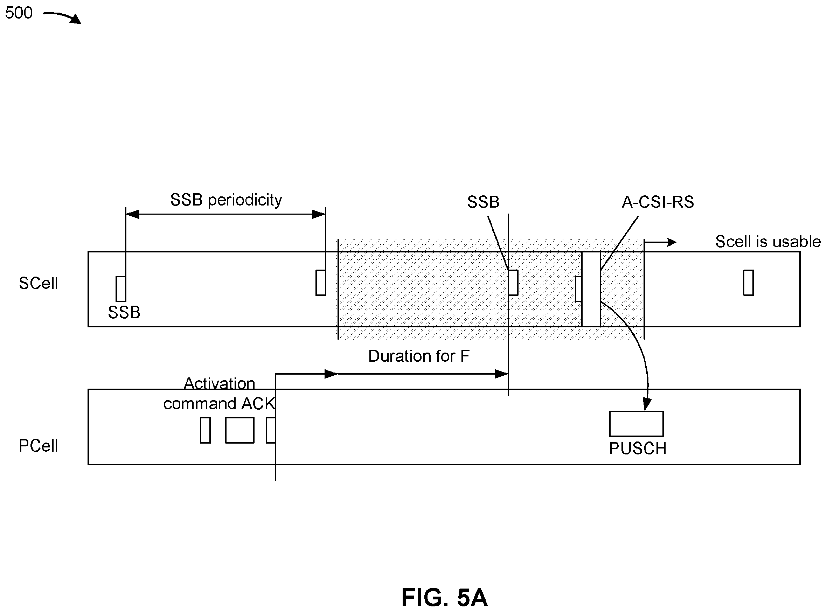

Figs. 5A-5B are diagrams illustrating an example 500 of a timing associated with secondary cell activation, in accordance with various aspects of the present disclosure.

As shown in Fig. 5A, a timing is provided for the secondary cell activation procedure of Fig. 4A. For example, on a secondary cell, a BS may transmit SSBs with a particular SSB periodicity. During a period between a first and a second SSB, the BS may transmit an activation command and the UE may transmit an ACK as a response on the primary cell. Based at least in part on a timing of the activation command and the ACK, the UE may not be ready for reference signal measurement until after the second SSB. In this case, the UE may wait, from when the UE is ready to receive a reference until a third SSB, which may correspond to a duration allocated for time period F. After the third SSB, the UE may receive an aperiodic CSI-RS (A-CSI-RS) on the secondary cell and transmit a PUSCH, that carries CSI feedback, on the primary cell. After transmission of the PUSCH, the secondary cell may be activated, and the UE may use the secondary cell for communication with the BS.

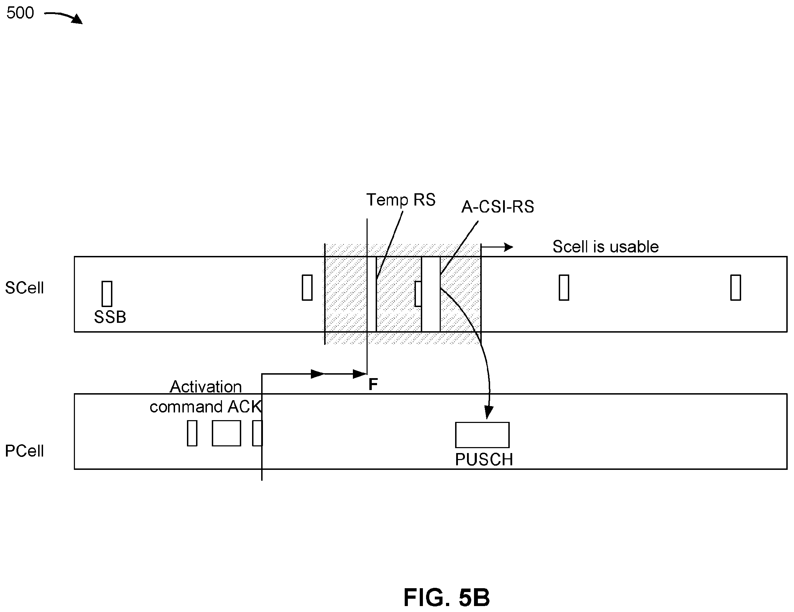

As shown in Fig. 5B, a timing is provided for the fast secondary cell activation procedure of Fig. 4B. For example, after the UE transmits the ACK, the UE measures a temporary reference signal on the secondary cell (e.g., an A-TRS, that enables measurement of an A-CSI-RS at an earlier time than would occur if the UE waited for the third SSB). In this case, a time period between when the UE is ready to receive a reference signal and an occurrence of the temporary reference signal (time period F) may be greatly reduced relative to a time period during which the UE is waiting for an SSB as in the secondary cell activation procedure of Fig. 4A. As a result, the UE receives an earlier A-CSI-RS and transmits an earlier PUSCH, thereby enabling the UE to start using the secondary cell for communication with the BS at a substantially earlier time period.

As indicated above, Figs. 5A-5B are provided as one or more examples. Other examples may differ from what is described with respect to Figs. 5A-5B. For example, the number of component carriers may be greater than two component carriers. Additionally, or alternatively, the primary cell (PCell) identified in some examples described herein may be another secondary cell (SCell). Additionally. or alternatively, the A-CSI-RS described herein may be a periodic CSI-RS or semi-persistent CSI-RS, and the A-CSI-RS may be conveyed by a PUCCH on a PCell or a PUSCH on an SCell.

As described above, using a TRS as a temporary reference signal to enable the UE to trigger an earlier A-CSI-RS than would occur if the UE waited for an SSB, may result in a reduction in a delay to activate a secondary cell. However, the UE may lack information identifying a timing for the TRS to enable completion of the secondary cell activation procedure. Some aspects described herein define a timing for the TRS and enable the UE to determine the timing for the TRS. For example, the UE may derive the timing based at least in part on a timing of an ACK transmission for a PDSCH that conveys a MAC CE (e.g., the MAC CE that triggers secondary cell activation). Additionally, or alternatively, the UE may receive information identifying the timing in the MAC CE that triggers secondary cell activation. In this way, the UE may identify a timing of the TRS, which enables faster secondary cell activation than if the UE waits for an SSB to occur prior to an A-CSI-RS for CQI reporting.

Figs. 6A-6B are diagrams illustrating an example 600 of reference signal based secondary cell activation, in accordance with various aspects of the present disclosure.

As shown in Fig. 6A, a UE 120 may transmit an ACK as a response to a PDSCH that conveys a MAC CE (e.g., the MAC CE that triggers secondary cell activation). In this case, UE 120 may determine a timing for the TRS based at least in part on a timing of the ACK. For example, UE 120 may determine that the TRS is to occur on the secondary cell in a first slot after the ACK transmission plus an offset amount of time. In other words, UE 120 may identify a first slot that starts at least 3 ms after the transmission of the ACK, as shown. In some aspects, UE 120 may identify a time or frequency resource for the TRS within the identified slot. For example, prior to transmission of the ACK. UE 120 may receive radio resource control (RRC) signaling identifying a time and/or frequency resource in which the TRS is to occur. In other words, UE 120 receives RRC signaling identifying the time and/or frequency resource for the TRS within a hypothetical slot, then, after transmission of the ACK, identifies the slot in which to monitor the identified time and/or frequency resource.

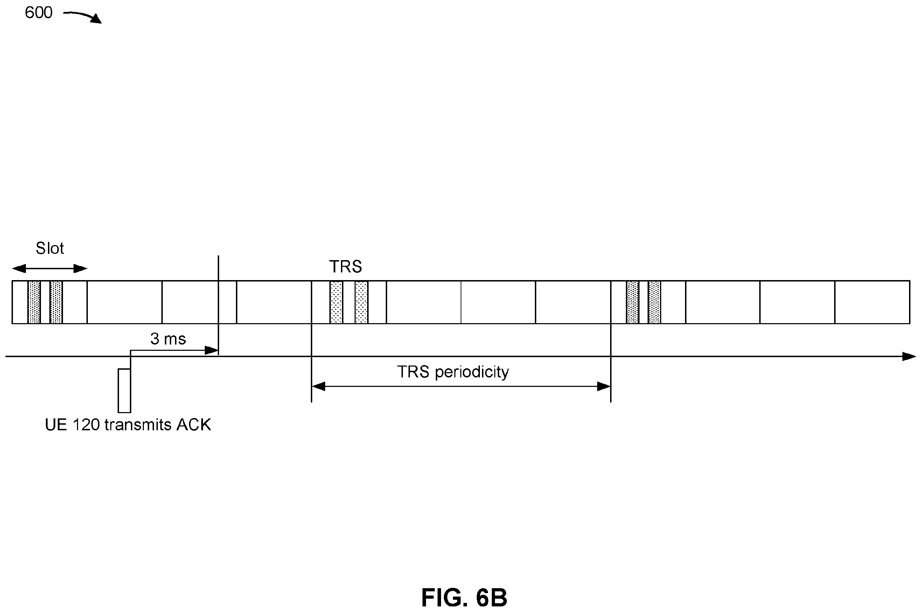

As shown in Fig. 6B, the TRS resource may occur with a defined periodicity. For example, UE 120 may receive RRC signaling identifying a time resource, a frequency resource, and/or a periodicity of the TRS occasions. In this case, when UE 120 transmits the ACK, UE 120 may determine to measure the TRS in a TRS occasion that occurs at least 3 ms after the transmission of the ACK. Although some aspects are described in terms of a 3 ms period (e.g., to allow for UE processing to switch from transmitting the ACK on the primary cell to measuring the TRS on the secondary cell), other offset values may be possible. Additionally, or alternatively, UE 120 may use a configurable offset value configured based at least in part on a capability of UE 120.

In some aspects, an occurrence of a TRS resource, in which UE 120 is to measure the TRS, may collide with another communication. For example, UE 120 may determine that a time and/or frequency resource for the TRS in a first slot occurring at least 3 ms after transmission of the ACK is the same time and/or frequency resource that UE 120 is to use for transmission on semi-static uplink symbols (e.g., configured by a tdd-UL-DLConfigComm or tdd-UL-DL-ConfigDedicated parameter). In this case, UE 120 may delay measurement of the TRS. For example, UE 120 may measure the TRS in a next slot in which a TRS resource is available (e.g., a next slot or a next periodic occurrence of the TRS according to a periodicity of the TRS resources). Additionally, or alternatively, UE 120 may fall back to non-TRS-based secondary cell activation. For example, when UE 120 determines that measuring the TRS collides with an uplink transmission, UE 120 may determine to wait for an SSB, as described above.

As indicated above, Figs. 6A-6B are provided as one or more examples. Other examples may differ from what is described with respect to Figs. 6A-6B.

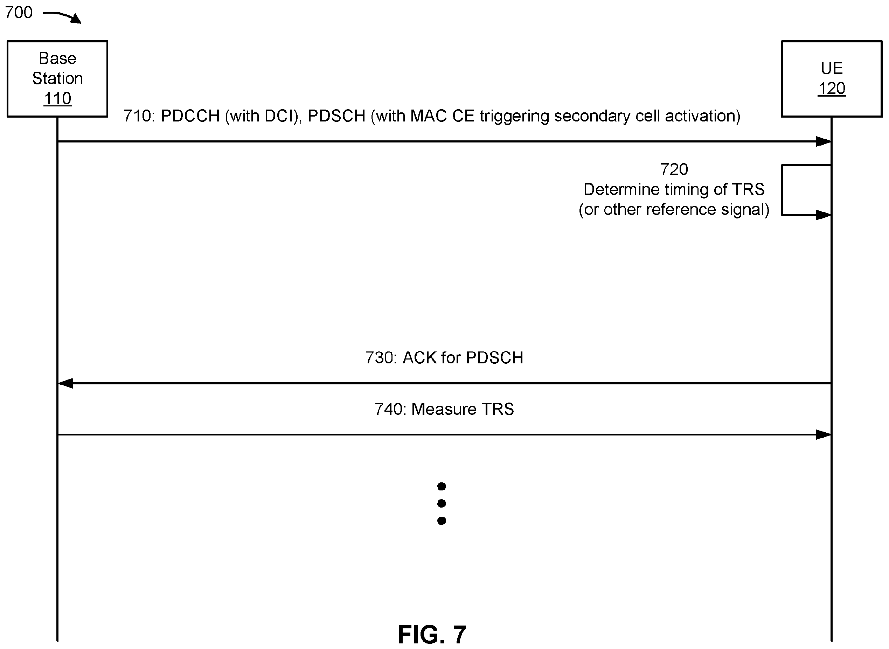

Fig. 7 is a diagram illustrating an example 700 associated with reference signal based secondary cell activation, in accordance with various aspects of the present disclosure. As shown in Fig. 7, example 700 includes communication between a base station 110 and a UE 120. In some aspects, base station 110 and UE 120 may be included in a wireless network, such as wireless network 100. Base station 110 and UE 120 may communicate on a wireless access link, which may include an uplink and a downlink.

As further shown in Fig. 7, and by reference numbers 710 and 720, UE 120 may receive a MAC CE triggering the secondary cell activation procedure. For example, base station 110 may transmit and UE 120 may receive a PDSCH that includes the MAC CE (e.g., which activates the secondary cell activation procedure). In this case, the MAC CE may include information identifying a timing of a TRS. Although some aspects are described herein in terms of a TRS, other reference signals may be possible, such as an activation reference signal, a temporary reference signal, or a channel state information reference signal resource set, among other examples. For example, UE 120 may parse the MAC CE to determine a time resource, a frequency resource, or an antenna port, among other examples, for measuring the TRS. In some aspects, UE 120 may determine whether to parse the MAC CE to determine the time resource based at least in part on an indication in a DCI that schedules the MAC CE. For example, when UE 120 receives a DCI, in a PDCCH, that schedules the PDSCH, which conveys the MAC CE, UE 120 may parse the DCI to identify a TRS activation. In this case, when the DCI indicates that use of the TRS is activated, UE 120 may determine to parse the MAC CE to identify a TRS timing and measure a TRS. In contrast, when the DCI indicates that use of the TRS is not activated, UE 120 may, for example, fall back to using SIB-based secondary cell activation, as described above.

In some aspects, UE 120 may parse the MAC CE To determine an offset value for measuring the TRS. For example, the MAC CE may include information indicating that the TRS is to occur in a first slot that is a particular quantity of slots, symbols, or milliseconds, among other examples after UE 120 transmits an ACK as a response to the MAC CE. The MAC CE may include information identifying temporary RSs that are to be triggered on a set of to-be-activated SCells. In some aspects, the TRS may occur in, at earliest, a reference slot, which may correspond to a last downlink slot of an Scell that overlaps with a particular defined slot. In some cases, the reference slot may be a first TRS occasion among RRC configured TRS occasions after the ACK transmission. In this way, base station 110 and UE 120 enable a dynamically configurable offset for measuring the TRS. In some aspects, the MAC CE includes a selection of an offset value (e.g., rather than an explicit identification of an offset value). For example, UE 120 may receive RRC signaling identifying a plurality of possible offset values, and the UE 120 may parse the MAC CE to identify a selection of a particular offset value of the plurality of possible offset values. As an example, the RRC signaling may include information identifying a quantity of RS bursts or a gap length between RS bursts, among other examples, which may be associated with or included in a TRS timing.

Additionally, or alternatively, the MAC CE may include information indicating that the TRS is to occur in a first TRS occasion that is a particular quantity of slots, symbols, or milliseconds, among other examples after UE 120 transmits an ACK as a response to the MAC CE. For example, UE 120 may receive RRC signaling identifying a periodicity of TRS occasions (e.g., and a time and/or frequency resource for a TRS), and the UE 120 may parse the MAC CE to identify a time delay after which UE 120 is to measure a TRS in a next occurring TRS occasion.

In some aspects, UE 120 may parse the MAC CE to identify a TRS resource occasion relative to a radio frame. For example, UE 120 may receive RRC signaling identifying a set of possible indices for a TRS resource and may parse the MAC CE to identify a selection of an index of the set of possible indices. In this case, UE 120 identifies a timing of the TRS using the index relative to, for example, the beginning of a radio frame rather than relative to a timing of an ACK transmission. In some aspects, UE 120 may determine that the TRS is to occur in a slot with the identified index or in a next TRS occasion after the slot with the identified index. In this way, UE 120 and base station 110 enable flexibility with respect to re-transmission of the PDSCH that conveys the MAC CE (e.g., which triggers the secondary cell activation).

As shown by reference numbers 730 and 740, based at least in part on determining the timing for the TRS, UE 120 may measure the TRS. For example, UE 120 may measure the TRS in a first slot a threshold period of time after an ACK transmission, where the threshold period of time corresponds to an offset identified based at least in part on the MAC CE. Additionally, or alternatively, UE 120 may measure the TRS in a first periodic TRS occasion a threshold period of time after the ACK transmission. Additionally, or alternatively, UE 120 may measure the TRS in a first slot or first occurrence a threshold period of time after a start of a radio frame.

As indicated above, Fig. 7 is provided as an example. Other examples may differ from what is described with respect to Fig. 7.

Fig. 8 is a diagram illustrating an example process 800 performed, for example, by a UE, in accordance with various aspects of the present disclosure. Example process 800 is an example where the UE (e.g., UE 120) performs operations associated with reference signal based secondary cell activation.

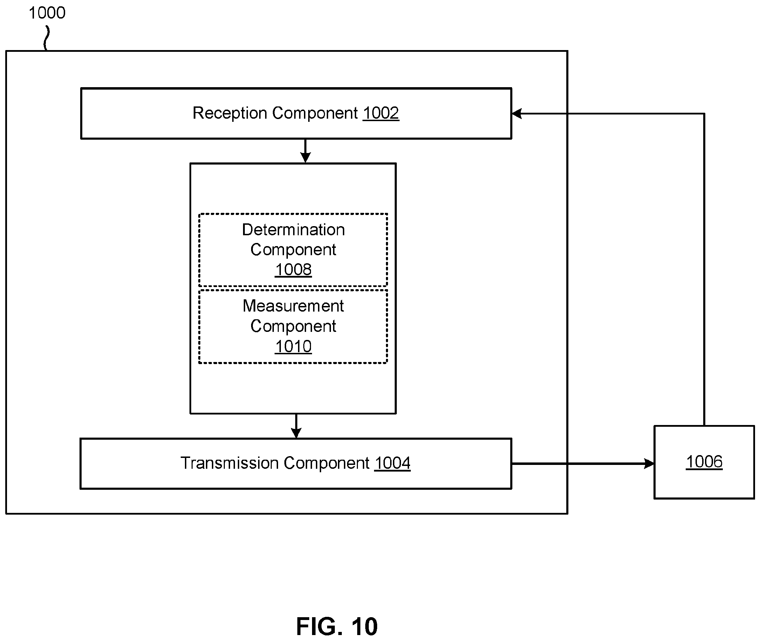

As shown in Fig. 8, in some aspects, process 800 may include determining a timing for a reference signal measurement (block 810). For example, the UE (e.g., using determination component 1008, depicted in Fig. 10) may determine a timing for a reference signal measurement, as described above.

As further shown in Fig. 8, in some aspects, process 800 may include measuring, for a secondary cell activation procedure, a reference signal based at least in part on determining the timing for the reference signal measurement (block 820). For example, the UE (e.g., using measurement component 1010, depicted in Fig. 10) may measure, for a secondary cell activation procedure, a reference signal based at least in part on determining the timing for the reference signal measurement, as described above.

Process 800 may include additional aspects, such as any single aspect or any combination of aspects described below and/or in connection with one or more other processes described elsewhere herein.

In a first aspect, determining the timing for the reference signal measurement comprises determining the timing for the reference signal measurement based at least in part on a timing of a feedback message transmission for a physical downlink shared channel conveying a MAC CE associated with the secondary cell activation procedure.

In a second aspect, alone or in combination with the first aspect, a reference signal resource, for the reference signal, is in a first slot after the feedback message transmission.

In a third aspect, alone or in combination with one or more of the first and second aspects, a reference signal resource, for the reference signal, occurs a threshold gap period after the feedback message transmission.

In a fourth aspect, alone or in combination with one or more of the first through third aspects, the reference signal occurs in a first reference signal occasion after the feedback message transmission.

In a fifth aspect, alone or in combination with one or more of the first through fourth aspects, a configuration of the reference signal measurement is determined based at least in part on radio resource control signaling.

In a sixth aspect, alone or in combination with one or more of the first through fifth aspects, determining the timing for the reference signal measurement comprises determining the timing for the reference signal measurement based at least in part on an occurrence of a collision between a first reference signal resource and a semi-statically configured uplink symbol.

In a seventh aspect, alone or in combination with one or more of the first through sixth aspects, the reference signal measurement occurs during a second reference signal resource after the first reference signal resource.

In an eighth aspect, alone or in combination with one or more of the first through seventh aspects, determining the timing for the reference signal measurement comprises determining the timing for the reference signal measurement based at least in part on a MAC CE.

In a ninth aspect, alone or in combination with one or more of the first through eighth aspects, process 800 includes determining a configuration of the reference signal measurement based at least in part on the MAC CE.

In a tenth aspect, alone or in combination with one or more of the first through ninth aspects, the timing for the reference signal measurement is based at least in part on a static offset value.

In an eleventh aspect, alone or in combination with one or more of the first through tenth aspects, the timing for the reference signal measurement is based at least in part on a start of a radio frame.

In a twelfth aspect, alone or in combination with one or more of the first through eleventh aspects, the timing of the reference signal measurement is based at least in part on an activation or deactivation in at least one of a downlink control information or a MAC CE.

Although Fig. 8 shows example blocks of process 800, in some aspects, process 800 may include additional blocks, fewer blocks, different blocks, or differently arranged blocks than those depicted in Fig. 8. Additionally, or alternatively, two or more of the blocks of process 800 may be performed in parallel.

Fig. 9 is a diagram illustrating an example process 900 performed, for example, by a base station, in accordance with various aspects of the present disclosure. Example process 900 is an example where the base station (e.g., base station 110) performs operations associated with reference signal based secondary cell activation.

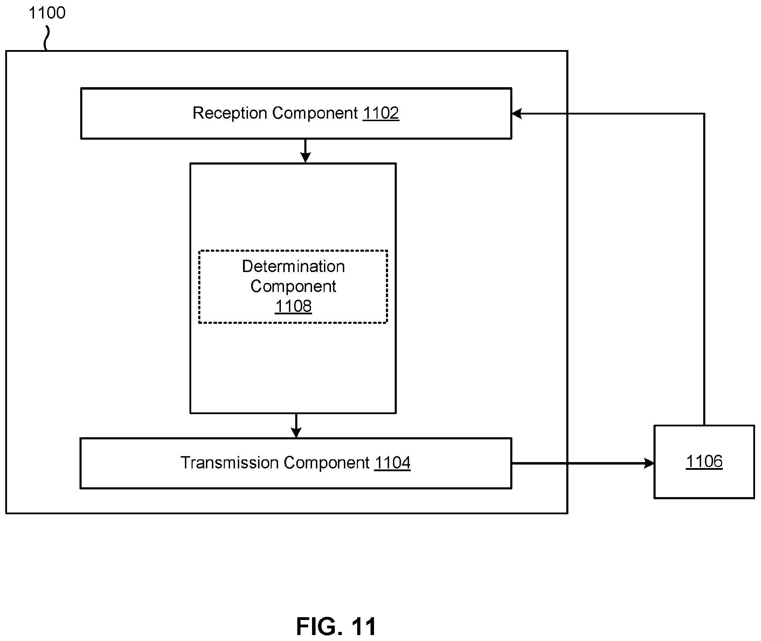

As shown in Fig. 9, in some aspects, process 900 may include determining a timing for a reference signal (block 910). For example, the base station (e.g., using determination component 1108, depicted in Fig. 11) may determine a timing for a reference signal, as described above.

As further shown in Fig. 9, in some aspects, process 900 may include transmitting, for a secondary cell activation procedure, the reference signal based at least in part on determining the timing for the reference signal (block 920). For example, the base station (e.g., using transmission component 1104, depicted in Fig. 11) may transmit, for a secondary cell activation procedure, the reference signal based at least in part on determining the timing for the reference signal, as described above.

Process 900 may include additional aspects, such as any single aspect or any combination of aspects described below and/or in connection with one or more other processes described elsewhere herein.

In a first aspect, determining the timing for the reference signal comprises determining the timing for the reference signal based at least in part on a timing of a feedback message transmission for a physical downlink shared channel conveying a MAC CE associated with the secondary cell activation procedure.

In a second aspect, alone or in combination with the first aspect, a reference signal resource, for the reference signal, is in a first slot after the feedback message transmission.

In a third aspect, alone or in combination with one or more of the first and second aspects, a reference signal resource, for the reference signal, occurs a threshold gap period after the feedback message transmission.

In a fourth aspect, alone or in combination with one or more of the first through third aspects, the reference signal occurs in a first reference signal occasion after the feedback message transmission.

In a fifth aspect, alone or in combination with one or more of the first through fourth aspects, process 900 includes transmitting radio resource control signaling identifying a configuration of the reference signal.

In a sixth aspect, alone or in combination with one or more of the first through fifth aspects, determining the timing for the reference signal comprises determining the timing for the reference signal based at least in part on an occurrence of a collision between a first reference signal resource and a semi-statically configured uplink symbol.

In a seventh aspect, alone or in combination with one or more of the first through sixth aspects, the reference signal occurs during a second reference signal resource after the first reference signal resource.

In an eighth aspect, alone or in combination with one or more of the first through seventh aspects, process 900 includes transmitting a MAC CE identifying the timing for the reference signal.

In a ninth aspect, alone or in combination with one or more of the first through eighth aspects, process 900 includes transmitting the MAC CE to identifying a configuration of the reference signal.

In a tenth aspect, alone or in combination with one or more of the first through ninth aspects, the timing for the reference signal is based at least in part on a static offset value.

In an eleventh aspect, alone or in combination with one or more of the first through tenth aspects, the timing for the reference signal is based at least in part on a start of a radio frame.

In a twelfth aspect, alone or in combination with one or more of the first through eleventh aspects, process 900 includes transmitting at least one of an activation or deactivation downlink control information or a MAC CE to identify the timing of the reference signal.

Although Fig. 9 shows example blocks of process 900, in some aspects, process 900 may include additional blocks, fewer blocks, different blocks, or differently arranged blocks than those depicted in Fig. 9. Additionally, or alternatively, two or more of the blocks of process 900 may be performed in parallel.

Fig. 10 is a block diagram of an example apparatus 1000 for wireless communication. The apparatus 1000 may be a UE, or a UE may include the apparatus 1000. In some aspects, the apparatus 1000 includes a reception component 1002 and a transmission component 1004, which may be in communication with one another (for example, via one or more buses and/or one or more other components). As shown, the apparatus 1000 may communicate with another apparatus 1006 (such as a UE, a base station, or another wireless communication device) using the reception component 1002 and the transmission component 1004. As further shown, the apparatus 1000 may include one or more of a determination component 1008 or a measurement component 1010, among other examples.

In some aspects, the apparatus 1000 may be configured to perform one or more operations described herein in connection with Figs. 6A-7. Additionally or alternatively, the apparatus 1000 may be configured to perform one or more processes described herein, such as process 800 of Fig. 8, among other examples. In some aspects, the apparatus 1000 and/or one or more components shown in Fig. 10 may include one or more components of the UE described above in connection with Fig. 2. Additionally, or alternatively, one or more components shown in Fig. 10 may be implemented within one or more components described above in connection with Fig. 2. Additionally or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 1002 may receive communications, such as reference signals, control information, data communications, or a combination thereof, from the apparatus 1006. The reception component 1002 may provide received communications to one or more other components of the apparatus 1000. In some aspects, the reception component 1002 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 1006. In some aspects, the reception component 1002 may include one or more antennas, a demodulator, a MIMO detector, a receive processor, a controller/processor, a memory, or a combination thereof, of the UE described above in connection with Fig. 2.

The transmission component 1004 may transmit communications, such as reference signals, control information, data communications, or a combination thereof, to the apparatus 1006. In some aspects, one or more other components of the apparatus 1006 may generate communications and may provide the generated communications to the transmission component 1004 for transmission to the apparatus 1006. In some aspects, the transmission component 1004 may perform signal processing on the generated communications (such as filtering, amplification, modulation, digital-to-analog conversion, multiplexing, interleaving, mapping, or encoding, among other examples), and may transmit the processed signals to the apparatus 1006. In some aspects, the transmission component 1004 may include one or more antennas, a modulator, a transmit MIMO processor, a transmit processor, a controller/processor, a memory, or a combination thereof, of the UE described above in connection with Fig. 2. In some aspects, the transmission component 1004 may be collocated with the reception component 1002 in a transceiver.

The determination component 1008 may determine a timing for a reference signal measurement. The determination component 1008 may determine a configuration of the reference signal measurement based at least in part on the MAC-CE. In some aspects, the determination component 1008 may include a receive processor, a transmit processor, a controller/processor, a memory, or a combination thereof, of the UE described above in connection with Fig. 2. The measurement component 1010 may measure, for a secondary cell activation procedure, a reference signal based at least in part on determining the timing for the reference signal measurement. In some aspects, the measurement component 1010 may include one or more antennas, a demodulator, a MIMO detector, a receive processor, a controller/processor, a memory, or a combination thereof, of the UE described above in connection with Fig. 2.

The number and arrangement of components shown in Fig. 10 are provided as an example. In practice, there may be additional components, fewer components, different components, or differently arranged components than those shown in Fig. 10. Furthermore, two or more components shown in Fig. 10 may be implemented within a single component, or a single component shown in Fig. 10 may be implemented as multiple, distributed components. Additionally or alternatively, a set of (one or more) components shown in Fig. 10 may perform one or more functions described as being performed by another set of components shown in Fig. 10.

Fig. 11 is a block diagram of an example apparatus 1100 for wireless communication. The apparatus 1100 may be a BS, or a BS may include the apparatus 1100. In some aspects, the apparatus 1100 includes a reception component 1102 and a transmission component 1104, which may be in communication with one another (for example, via one or more buses and/or one or more other components). As shown, the apparatus 1100 may communicate with another apparatus 1106 (such as a UE, a base station, or another wireless communication device) using the reception component 1102 and the transmission component 1104. As further shown, the apparatus 1100 may include a determination component 1108, among other examples.

In some aspects, the apparatus 1100 may be configured to perform one or more operations described herein in connection with Figs. 6A-7. Additionally or alternatively, the apparatus 1100 may be configured to perform one or more processes described herein, such as process 900 of Fig. 9, among other examples. In some aspects, the apparatus 1100 and/or one or more components shown in Fig. 11 may include one or more components of the BS described above in connection with Fig. 2. Additionally, or alternatively, one or more components shown in Fig. 11 may be implemented within one or more components described above in connection with Fig. 2. Additionally or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 1102 may receive communications, such as reference signals, control information, data communications, or a combination thereof, from the apparatus 1106. The reception component 1102 may provide received communications to one or more other components of the apparatus 1100. In some aspects, the reception component 1102 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 1106. In some aspects, the reception component 1102 may include one or more antennas, a demodulator, a MIMO detector, a receive processor, a controller/processor, a memory, or a combination thereof, of the BS described above in connection with Fig. 2.

The transmission component 1104 may transmit communications, such as reference signals, control information, data communications, or a combination thereof, to the apparatus 1106. In some aspects, one or more other components of the apparatus 1106 may generate communications and may provide the generated communications to the transmission component 1104 for transmission to the apparatus 1106. In some aspects, the transmission component 1104 may perform signal processing on the generated communications (such as filtering, amplification, modulation, digital-to-analog conversion, multiplexing, interleaving, mapping, or encoding, among other examples), and may transmit the processed signals to the apparatus 1106. In some aspects, the transmission component 1104 may include one or more antennas, a modulator, a transmit MIMO processor, a transmit processor, a controller/processor, a memory, or a combination thereof, of the BS described above in connection with Fig. 2. In some aspects, the transmission component 1104 may be collocated with the reception component 1102 in a transceiver.

The determination component 1108 may determine a timing for a reference signal. In some aspects, the determination component 1108 may include one or more antennas, a demodulator, a MIMO detector, a receive processor, a modulator, a transmit MIMO processor, a transmit processor, a controller/processor, a memory, or a combination thereof, of the BS described above in connection with Fig. 2. The transmission component 1104 may transmit, for a secondary cell activation procedure, the reference signal based at least in part on determining the timing for the reference signal. In some aspects, the transmission component 1104 may transmit radio resource control signaling identifying a configuration of the reference signal. In some aspects, the transmission component 1104 may transmit a MAC CE identifying the timing for the reference signal. In some aspects, the transmission component 1104 may transmit the MAC CE to identifying a configuration of the reference signal. In some aspects, the transmission component 1104 may transmit at least one of an activation or deactivation downlink control information or a MAC CE to identify the timing of the reference signal.

The number and arrangement of components shown in Fig. 11 are provided as an example. In practice, there may be additional components, fewer components, different components, or differently arranged components than those shown in Fig. 11. Furthermore, two or more components shown in Fig. 11 may be implemented within a single component, or a single component shown in Fig. 11 may be implemented as multiple, distributed components. Additionally or alternatively, a set of (one or more) components shown in Fig. 11 may perform one or more functions described as being performed by another set of components shown in Fig. 11.

The foregoing disclosure provides illustration and description but is not intended to be exhaustive or to limit the aspects to the precise forms disclosed. Modifications and variations may be made in light of the above disclosure or may be acquired from practice of the aspects.

As used herein, the term "component" is intended to be broadly construed as hardware and/or a combination of hardware and software. "Software" shall be construed broadly to mean instructions, instruction sets. code, code segments, program code, programs, subprograms, software modules, applications, software applications, software packages, routines, subroutines, objects, executables, threads of execution, procedures, and/or functions, among other examples, whether referred to as software, firmware, middleware, microcode, hardware description language, or otherwise. As used herein, a "processor" is implemented in hardware and/or a combination of hardware and software. It will be apparent that systems and/or methods described herein may be implemented in different forms of hardware and/or a combination of hardware and software. The actual specialized control hardware or software code used to implement these systems and/or methods is not limiting of the aspects. Thus, the operation and behavior of the systems and/or methods are described herein without reference to specific software code, since those skilled in the art will understand that software and hardware can be designed to implement the systems and/or methods based, at least in part, on the description herein.

As used herein, "satisfying a threshold" may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various aspects. Many of these features may be combined in ways not specifically recited in the claims and/or disclosed in the specification. The disclosure of various aspects includes each dependent claim in combination with every other claim in the claim set. As used herein, a phrase referring to "at least one of" a list of items refers to any combination of those items, including single members. As an example, "at least one of: a, b, or c" is intended to cover a, b, c, a + b, a + c, b + c, and a + b + c, as well as any combination with multiples of the same element (e.g., a + a, a + a + a, a + a + b, a + a + c, a + b + b, a + c + c, b + b, b + b + b, b + b + c, c + c, and c + c + c, or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items and may be used interchangeably with "one or more." Where only one item is intended, the phrase "only one" or similar language is used. Also, as used herein, the terms "has," "have," "having," or the like are intended to be open-ended terms that do not limit an element that they modify (e.g., an element "having" A may also have B). Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. An apparatus for wireless communication by a user equipment "UE" (120), comprising:
one or more memories (282); and
one or more processors (258; 280), coupled to the one or more memories (282),
**characterized in** being configured to cause the UE (120) to:
receive radio resource control "RRC" signaling identifying a gap length between a plurality of tracking reference signal "TRS" bursts;
receive a medium access control control element "MAC-CE" associated with the secondary cell activation procedure;
determine (720; 810) slots for measurements of the plurality of TRS bursts based at least in part on a timing of a feedback message transmission, by the UE, for a physical downlink shared channel conveying the MAC-CE and the gap length; and
measure (740; 820), for a secondary cell activation procedure, the plurality of TRS bursts based at least in part on determining the slots for the measurement of the plurality of TRS bursts.

2. The apparatus of claim 1, wherein a reference signal resource, for a TRS of the plurality of TRS bursts, is in a first slot after the feedback message transmission or occurs a threshold gap period after the feedback message transmission.

3. The apparatus of claim 1, wherein a TRS of the plurality of TRS bursts occurs in a first reference signal occasion after the feedback message transmission.

4. The apparatus of claim 1, wherein the one or more processors, to determine the slots for the measurement of the plurality of TRS bursts, are configured to:
determine the slots for the measurement of the plurality of TRS bursts based at least in part on an occurrence of a collision between a first reference signal resource and a semi-statically configured uplink symbol.

5. The apparatus of claim 4, wherein measurement of a TRS of the plurality of TRS bursts occurs during a second reference signal resource after the first reference signal resource.

6. The apparatus of claim 1, wherein the slots for the measurement of the plurality of TRS bursts are based at least in part on a static offset value.

7. The apparatus of claim 1, wherein the MAC-CE comprises an activation or deactivation.

8. An apparatus for wireless communication by a base station (110), comprising:
one or more memories (242); and
one or more processors (220; 240), coupled to the one or more memories (242), **characterized in** being configured to cause the base station (110) to:
transmit radio resource control "RRC" signaling identifying a gap length between a plurality of tracking reference signal "TRS" bursts;
transmit a medium access control control element "MAC-CE" associated with the secondary cell activation procedure;
determine (910) slots in which to transmit the plurality of TRS bursts based at least in part on a timing of a feedback message transmission, of a user equipment, for a physical downlink shared channel conveying the MAC-CE and the gap length; and
transmit (920), for a secondary cell activation procedure, the plurality of TRS bursts based at least in part on determining the slots in which to transmit the plurality of TRS bursts.

9. The apparatus of claim 8, wherein a reference signal resource, for a TRS of the plurality of TRS bursts, is in a first slot after the feedback message transmission or occurs a threshold gap period after the feedback message transmission.

10. The apparatusof claim 8, wherein a TRS of the plurality of TRS bursts occurs in a first reference signal occasion after the feedback message transmission.

11. The apparatus of claim 8, wherein the one or more processors, to determine the slots in which to transmit the plurality of TRS bursts, are configured to:
determine the slots in which to transmit the plurality of TRS bursts based at least in part on an occurrence of a collision between a first reference signal resource and a semi-statically configured uplink symbol.

12. The apparatus of claim 11, wherein the a TRS of the plurality of TRS bursts occurs during a second reference signal resource after the first reference signal resource.

13. The apparatus of claim 8, wherein the slots in which to transmit the plurality of TRS bursts are based at least in part on a static offset value.

14. A method of wireless communication performed by a user equipment "UE" (120), **characterized in** comprising:
receiving radio resource control "RRC" signaling identifying a gap length between a plurality of tracking reference signal "TRS" bursts;
receiving a medium access control control element "MAC-CE" associated with the secondary cell activation procedure;
determining (720; 810) slots for a measurements of the plurality of TRS bursts based at least in part on a timing of a feedback message transmission, by the UE, for a physical downlink shared channel conveying the MAC-CE and the gap length; and
measuring (740; 820), for a secondary cell activation procedure, the plurality of TRS bursts based at least in part on determining the slots for the measurement of the plurality of TRS bursts.

15. A method of wireless communication performed by a base station (110), **characterized in** comprising
transmit radio resource control "RRC" signaling identifying a gap length between a plurality of tracking reference signal "TRS" bursts;
transmit a medium access control control element "MAC-CE" associated with the secondary cell activation procedure;
determining (910) slots in which to transmit the plurality of TRS bursts based at least in part on a timing of a feedback message transmission, of a user equipment, for a physical downlink shared channel conveying the MAC-CE and the gap length; and
transmitting (920), for a secondary cell activation procedure, the plurality of TRS bursts based at least in part on determining the slots in which to transmit the plurality of TRS bursts.

## Patentansprüche

1. Eine Vorrichtung für eine drahtlose Kommunikation durch ein Benutzergerät (User Equipment bzw. UE) (120), aufweisend:
einen oder mehrere Speicher (282), und
einen oder mehrere Prozessoren (258; 280), die mit dem einen oder den mehreren Speichern (282) gekoppelt sind,
**dadurch gekennzeichnet, dass** die Vorrichtung konfiguriert ist zum Veranlassen des UE (120) zum:
Empfangen einer Funkressourcensteuerung (Radio Resource Control bzw. RRC)-Signalisierung, die eine Lückenlänge zwischen einer Vielzahl von Verfolgungsreferenzsignal (Tracking Reference Signal bzw. TRS)-Bursts identifiziert,
Empfangen eines MAC (Medium Access Control)-Steuerelements (Control Element bzw. CE), das mit einer Sekundärzellen-Aktivierungsprozedur assoziiert ist,
Bestimmen (720; 810) von Schlitzen für Messungen der Vielzahl von TRS-Bursts basierend wenigstens teilweise auf einem Timing einer Rückmeldungsnachricht-Sendung durch das UE für einen gemeinsamen physikalischen Abwärtsstrecke-Kanal, der das MAC-CE und die Lückenlänge übermittelt, und
Messen (740; 820), für die Sekundärzellen-Aktivierungsprozedur, der Vielzahl von TRS-Bursts basierend wenigstens teilweise auf dem Bestimmen der Schlitze für die Messung der Vielzahl von TRS-Bursts.

2. Vorrichtung nach Anspruch 1, wobei sich eine Referenzsignalressource für ein TRS aus der Vielzahl von TRS-Bursts in einem ersten Schlitz nach der Rückmeldungsnachricht-Sendung befindet oder eine Schwellenwert-Lückenperiode nach der Rückmeldungsnachricht-Sendung auftritt.

3. Vorrichtung nach Anspruch 1, wobei ein TRS aus der Vielzahl von TRS-Bursts in einer ersten Referenzsignal-Gelegenheit nach der Rückmeldungsnachricht-Sendung auftritt.

4. Vorrichtung nach Anspruch 1, wobei der eine oder die mehreren Prozessoren für das Bestimmen der Schlitze für die Messung der Vielzahl von TRS-Bursts konfiguriert sind zum:
Bestimmen der Schlitze für die Messung der Vielzahl von TRS-Bursts basierend wenigstens teilweise auf dem Auftreten einer Kollision zwischen einer ersten Referenzsignalressource und einem semistatisch konfigurierten Aufwärtsstrecke-Symbol.

5. Vorrichtung nach Anspruch 4, wobei die Messung eines TRS aus der Vielzahl von TRS-Bursts während einer zweiten Referenzsignalressource nach der ersten Referenzsignalressource auftritt.

6. Vorrichtung nach Anspruch 1, wobei die Schlitze für die Messung der Vielzahl von TRS-Bursts wenigstens teilweise auf einem statischen Versatzwert basieren.

7. Vorrichtung nach Anspruch 1, wobei das MAC-CE eine Aktivierung oder Deaktivierung aufweist.

8. Eine Vorrichtung für eine drahtlose Kommunikation durch eine Basisstation (110), aufweisend:
einen oder mehrere Speicher (242), und
einen oder mehrere Prozessoren (220; 240), die mit dem einen oder den mehreren Speichern (242) gekoppelt sind,
**dadurch gekennzeichnet, dass** die Vorrichtung konfiguriert ist zum Veranlassen der Basisstation (110) zum:
Senden einer Funkressourcensteuerung (Radio Resource Control bzw. RRC)-Signalisierung, die eine Lückenlänge zwischen einer Vielzahl von Verfolgungsreferenzsignal (Tracking Reference Signal bzw. TRS)-Bursts identifiziert,
Senden eines MAC (Medium Access Control)-Steuerelements (Control Element bzw. CE), das mit einer Sekundärzellen-Aktivierungsprozedur assoziiert ist,
Bestimmen (910) von Schlitzen, in denen die Vielzahl von TRS-Bursts gesendet werden sollen, basierend wenigstens teilweise auf einem Timing einer Rückmeldungsnachricht-Sendung eines Benutzergeräts für einen gemeinsamen physikalischen Abwärtsstrecke-Kanal, der das MAC-CE und die Lückenlänge übermittelt, und
Senden (920), für die Sekundärzellen-Aktivierungsprozedur, der Vielzahl von TRS-Bursts basierend wenigstens teilweise auf dem Bestimmen der Schlitze, in denen die Vielzahl von TRS-Bursts gesendet werden sollen.

9. Vorrichtung nach Anspruch 8, wobei sich eine Referenzsignalressource für ein TRS aus der Vielzahl von TRS-Bursts in einem ersten Schlitz nach der Rückmeldungsnachricht-Sendung befindet oder eine Schwellenwert-Lückenperiode nach der Rückmeldungsnachricht-Sendung auftritt.

10. Vorrichtung nach Anspruch 8, wobei ein TRS aus der Vielzahl von TRS-Bursts in einer ersten Referenzsignal-Gelegenheit nach der Rückmeldungsnachricht-Sendung auftritt.

11. Vorrichtung nach Anspruch 8, wobei der eine oder die mehreren Prozessoren für das Bestimmen der Schlitze, in denen die Vielzahl von TRS-Bursts gesendet werden sollen, konfiguriert sind zum:
Bestimmen der Schlitze, in denen die Vielzahl von TRS-Bursts gesendet werden sollen, basierend wenigstens teilweise auf dem Auftreten einer Kollision zwischen einer ersten Referenzsignalressource und einem semistatisch konfigurierten Aufwärtsstrecke-Symbol.

12. Vorrichtung nach Anspruch 11, wobei ein TRS aus der Vielzahl von TRS-Bursts während einer zweiten Referenzsignalressource nach der ersten Referenzsignalressource auftritt.

13. Vorrichtung nach Anspruch 8, wobei die Schlitze, in denen die Vielzahl von TRS-Bursts gesendet werden sollen, wenigstens teilweise auf einem statischen Versatzwert basieren.

14. Ein Verfahren für eine drahtlose Kommunikation, das durch ein Benutzergerät (User Equipment bzw. UE) (120) durchgeführt wird, **gekennzeichnet durch**:
Empfangen einer Funkressourcensteuerung (Radio Resource Control bzw. RRC)-Signalisierung, die eine Lückenlänge zwischen einer Vielzahl von Verfolgungsreferenzsignal (Tracking Reference Signal bzw. TRS)-Bursts identifiziert,
Empfangen eines MAC (Medium Access Control)-Steuerelements (Control Element bzw. CE), das mit einer Sekundärzellen-Aktivierungsprozedur assoziiert ist,
Bestimmen (720; 810) von Schlitzen für Messungen der Vielzahl von TRS-Bursts basierend wenigstens teilweise auf einem Timing einer Rückmeldungsnachricht-Sendung durch das UE für einen gemeinsamen physikalischen Abwärtsstrecke-Kanal, der das MAC-CE und die Lückenlänge übermittelt, und
Messen (740; 820), für die Sekundärzellen-Aktivierungsprozedur, der Vielzahl von TRS-Bursts basierend wenigstens teilweise auf dem Bestimmen der Schlitze für die Messung der Vielzahl von TRS-Bursts.

15. Ein Verfahren für eine drahtlose Kommunikation, das durch eine Basisstation (110) durchgeführt wird, **gekennzeichnet durch**:
Senden einer Funkressourcensteuerung (Radio Resource Control bzw. RRC)-Signalisierung, die eine Lückenlänge zwischen einer Vielzahl von Verfolgungsreferenzsignal (Tracking Reference Signal bzw. TRS)-Bursts identifiziert,
Senden eines MAC (Medium Access Control)-Steuerelements (Control Element bzw. CE), das mit einer Sekundärzellen-Aktivierungsprozedur assoziiert ist,
Bestimmen (910) von Schlitzen, in denen die Vielzahl von TRS-Bursts gesendet werden sollen, basierend wenigstens teilweise auf einem Timing einer Rückmeldungsnachricht-Sendung eines Benutzergeräts für einen gemeinsamen physikalischen Abwärtsstrecke-Kanal, der das MAC-CE und die Lückenlänge übermittelt, und
Senden (920), für die Sekundärzellen-Aktivierungsprozedur, der Vielzahl von TRS-Bursts basierend wenigstens teilweise auf dem Bestimmen der Schlitze, in denen die Vielzahl von TRS-Bursts gesendet werden sollen.

## Revendications

1. Appareil pour une communication sans fil par un équipement utilisateur « UE » (120), comprenant :
une ou plusieurs mémoires (282) ; et
un ou plusieurs processeurs (258, 280), couplés aux une ou plusieurs mémoires (282), **caractérisé en ce qu'**ils sont configurés pour amener l'UE (120) à :
recevoir une signalisation de commande de ressource radio « RRC » identifiant une longueur d'intervalle entre une pluralité de rafales de signaux de référence de suivi « TRS » ;
recevoir un élément de commande de commande d'accès au support « MAC-CE » associé à la procédure d'activation de cellule secondaire ;
déterminer (720 ; 810) des créneaux pour des mesures de la pluralité de rafales TRS sur la base au moins en partie d'une temporisation d'une transmission de message de rétroaction, par l'UE, pour un canal partagé de liaison descendante physique acheminant le MAC-CE et la longueur d'intervalle ; et
mesurer (740 ; 820), pour une procédure d'activation de cellule secondaire, la pluralité de rafales TRS sur la base au moins en partie d'une détermination des créneaux pour la mesure de la pluralité de rafales TRS.

2. Appareil selon la revendication 1, dans lequel une ressource de signal de référence, pour un TRS de la pluralité de rafales TRS, est dans un premier créneau après la transmission de message de rétroaction ou survient une période d'intervalle seuil après la transmission de message de rétroaction.

3. Appareil selon la revendication 1, dans lequel un TRS de la pluralité de rafales TRS survient dans une première occasion de signal de référence après une transmission de message de rétroaction.

4. Appareil selon la revendication 1, dans lequel les un ou plusieurs processeurs, pour déterminer les créneaux pour la mesure de la pluralité de rafales TRS, sont configurés pour :
déterminer les créneaux pour la mesure de la pluralité de rafales TRS sur la base au moins en partie d'une occurrence d'une collision entre une première ressource de signal de référence et un symbole de liaison montante configuré de manière semi-statique.

5. Appareil selon la revendication 4, dans lequel une mesure d'un TRS de la pluralité de rafales TRS survient pendant une seconde ressource de signal de référence après la première ressource de signal de référence.

6. Appareil selon la revendication 1, dans lequel les créneaux pour la mesure de la pluralité de rafales TRS sont basés au moins en partie sur une valeur de décalage statique.

7. Appareil selon la revendication 1, dans lequel le MAC-CE comprend une activation ou une désactivation.

8. Appareil pour une communication sans fil par une station de base (110), comprenant :
une ou plusieurs mémoires (242) ; et
un ou plusieurs processeurs (220 ; 240), couplés aux une ou plusieurs mémoires (242), **caractérisé en ce qu'**ils sont configurés pour amener la station de base (110) à :
transmettre une signalisation de commande de ressource radio « RRC » identifiant une longueur d'intervalle entre une pluralité de rafales de signaux de référence de suivi « TRS » ;
transmettre un élément de commande de commande d'accès au support « MAC-CE » associé à la procédure d'activation de cellule secondaire ;
déterminer (910) des créneaux dans lesquels transmettre la pluralité de rafales TRS sur la base au moins en partie d'une temporisation d'une transmission de message de rétroaction, d'un équipement utilisateur, pour un canal partagé de liaison descendante physique acheminant le MAC-CE et la longueur d'intervalle ; et
transmettre (920), pour une procédure d'activation de cellule secondaire, la pluralité de rafales TRS sur la base au moins en partie d'une détermination des créneaux dans lesquels transmettre la pluralité de rafales TRS.

9. Appareil selon la revendication 8, dans lequel une ressource de signal de référence, pour un TRS de la pluralité de rafales TRS, est dans un premier créneau après la transmission de message de rétroaction ou survient une période d'intervalle seuil après la transmission de message de rétroaction.

10. Appareil selon la revendication 8, dans lequel un TRS de la pluralité de rafales TRS survient dans une première occasion de signal de référence après la transmission de message de rétroaction.

11. Appareil selon la revendication 8, dans lequel les un ou plusieurs processeurs, pour déterminer les créneaux dans lesquels transmettre la pluralité de rafales TRS, sont configurés pour :
déterminer les créneaux dans lesquels transmettre la pluralité de rafales TRS sur la base au moins en partie d'une occurrence d'une collision entre une première ressource de signal de référence et un symbole de liaison montante configuré de manière semi-statique.

12. Appareil selon la revendication 11, dans lequel le TRS de la pluralité de rafales TRS survient pendant une seconde ressource de signal de référence après la première ressource signal de référence.

13. Appareil selon la revendication 8, dans lequel les créneaux dans lesquels transmettre la pluralité de rafales TRS sont basés au moins en partie sur une valeur de décalage statique.

14. Procédé de communication sans fil réalisé par un équipement utilisateur « UE » (120), **caractérisé en ce qu'**il comprend :
une réception d'une signalisation de commande de ressource radio « RRC » identifiant une longueur d'intervalle entre une pluralité de rafales de signaux de référence de suivi « TRS » ;
une réception d'un élément de commande de commande d'accès au support « MAC-CE » associé à la procédure d'activation de cellule secondaire ;
une détermination (720 ; 810) de créneaux pour des mesures de la pluralité de rafales TRS sur la base au moins en partie d'une temporisation d'une transmission de message de rétroaction, par l'UE, pour un canal partagé de liaison descendante physique acheminant le MAC-CE et la longueur d'intervalle ; et
une mesure (740 ; 820), pour une procédure d'activation de cellule secondaire, de la pluralité de rafales TRS sur la base au moins en partie d'une détermination des créneaux pour la mesure de la pluralité de rafales TRS.

15. Procédé de communication sans fil réalisé par une station de base (110), **caractérisé en ce qu'**il comprend :
une transmission d'une signalisation de commande de ressource radio « RRC » identifiant une longueur d'intervalle entre une pluralité de rafales de signaux de référence de suivi « TRS » ;
une transmission d'un élément de commande de commande d'accès au support « MAC-CE » associé à la procédure d'activation de cellule secondaire ;
une détermination (910) de créneaux dans lesquels transmettre la pluralité de rafales TRS sur la base au moins en partie d'une temporisation d'une transmission de message de rétroaction, d'un équipement utilisateur, pour un canal partagé de liaison descendante physique acheminant le MAC-CE et la longueur d'intervalle ; et
une transmission (920), pour une procédure d'activation de cellule secondaire, de la pluralité de rafales TRS sur la base au moins en partie d'une détermination des créneaux dans lesquels transmettre la pluralité de rafales TRS.
